# EUROPEAN PATENT APPLICATION

(11) **EP 0 863 503 A2**
(43) Date of publication of application: **09.09.1998**
(21) Application number: 98200473.1
(22) Date of filing: 14.02.1998
(51) Int. Cl.: G11B 7/24

(54) **Compact disk with human readable information on an internal surface**

(30) Priority: 28.02.1997 US 807410
(71) Applicant: EASTMAN KODAK COMPANY, Rochester, New York 14650 (US)
(72) Inventor: Wen, Xin, c/o Eastman Kodak Company, Rochester, New York 14650-2201 (US); DeBoer, Charles D., c/o Eastman Kodak Company, Rochester, New York 14650-2201 (US); Amell, Alfred J., c/o Eastman Kodak Company, Rochester, New York 14650-2201 (US)
(74) Representative: Parent, Yves

(57) **Abstract**

A compact disk is disclosed in which printing human readable information is formed on an internal surface of the disk.

## Description

### FIELD OF THE INVENTION

The present invention relates to compact disks having internal recorded and print information.

### BACKGROUND OF THE INVENTION

A compact disk (CD) is a high-volume and long lived data-storage medium. One recordable compact disk (CD-R) contains a polycarbonate disk that is coated with a dye layer, a metallized reflective layer, and a protective layer. A CD-R will be understood to be a compact disk that can be written on, typically by a laser beam as contrasted with a CD-ROM which information is replicated by injection molding. Cyanine, phthalocyanine, and metallized azo dyes are commonly used dyes coated in a polymer binder in the dye layer. The metallized reflective layer typically consists of gold in CD-R, and aluminum in CD-ROM. In a CD writer, a laser beam illuminates the dye polymers through the polycarbonate substrate as the disk spins. The illumination is turned on and off at selective locations determined by the input digital information. The heating by the laser causes the dye layer to chemically change at these locations, forming readable marks in the dye polymer. The degraded dye polymers in the marked regions are less reflective than the unmarked regions. During the reading process, a low-power laser scans the dye polymer layer in a recorded disk. The laser light is reflected directly from the unmarked regions, but is scattered or diminished in the marked regions. A sensor monitors the transitions between the marked and unmarked regions from the intensity of the reflective light, and converts it into a digital data stream. Similar to the above process, a CD-ROM differentiates the intensity of the reflective light by pits and lands in the compact disks. These pits and lands are pre-recorded by pressing the compact disks, typically mass produced.

The CDs are often coated with a printable surface opposite to the surface from which the information is recorded and retrieved. On the printable surface, a label is printed which can be logos, trademarks, text, graphics, and bar codes, etc., which are related to the information stored on the CD. The label also protects the CD from physical damage. Because the CD spins at high speed in the writer and the player, the CD label needs to be precisely balanced to the center of the disk for smooth rotation.

Labeling of CD disks has routinely been accomplished through screen printing methods. While this method can provide a wide variety of label content, it tends to be cost ineffective for run lengths less than 300-400 disks because the fixed cost on unique materials and set-up are shared by all the disks in each run. The screen printing technique is well described in the textbook "Graphic Arts Manual", edited by Janet and Irving Field, Arno/Musarts Press, New York, N.Y., 1980, pp. 416 to 418. In screen printing a stencil of the image is prepared, placed in contact with the CD and then ink is spread by squeegee across the stencil surface. Where there are openings in the stencil the ink passes through to the surface of the CD, thus producing the image. Preparation of the stencil is an elaborate, time consuming and expensive process.

Recently, significant increases in use of CD-R disks as a data distribution vehicle have increased the need to provide customized CD label content to reflect the data content of the disk. For these applications, the screen label printing presents a dilemma as CD-R disks are designed to allow customized user information to be recorded in standardized CD formats.

Initially, the customized label information was "hand written" on the disk surface using felt tipped markers. While this method allowed users to individually identify disks, it tends to be labor intensive, prone to human error in transcription, and aesthetically limited.

Other attempts to provide a CD-R labeling solution have incorporated digitally printed adhesive labels. Label stock for this type of CD-R labeling is available from a number of sources. These allow pre-cut labels to be printed using desktop or commercial inkjet, thermal wax transfer, or electrophotographic printers. An example of such labels is the STOMP Company's (Irvine, California) CD Stomper package of die-cut CD labels that can be printed on any 8.5 by 11 inch inkjet or laser electrophotographic printer. Following printing, the labels can be applied manually with or without the aid of an alignment tool or a specially designed machine. This method can be labor intensive. It is also prone to human error in label transfer. Damage to the CD-R can result if the label is removed. System performance problems can occur due to disk imbalance or label delamination in the CD writer or reader.

US-A-5,317,337 describes an apparatus and method for printing label information on a CD. Both inkjet and laser electrophotographic printing are described, but the laser electrophotographic printing is limited to printing ink onto an intermediate drum and then transferring the image to the CD label, that is, offset printing

Within the past several years, methods for direct CD labeling have been growing in prominence. These methods utilize the versatility and ease of the setup associated with digital printing to provide customized label content directly on a disk surface. The most commonly used direct CD printers incorporate ink jet or thermal wax transfer technologies. Examples of such printers are the AFFEX Corporation's (2522 Chambers Road, Suite 110, Tustin, California) Multi Media Color Ink Jet Printer, and the FARGO Corporation's (Eden Prairie, Minnesota) Signature CD Color Printer. These printers can either stand alone or be integrated into a computerized disk writing system reducing problems associated with labor, human error, disk damage, and imbalance. While printers of this type can produce satisfactory output, specially designed layers are required for their use. There is concern over performance of printed image quality for both types of printers. Thermal printing has demonstrated a lack of robustness with respect to abrasion and ink jet printing is less resistant to moisture. There are additional concerns over the inability to produce multicolor output on the thermal wax transfer CD-label printers, and the long print time required for the ink jet label printing. Additionally, both of these printers are binary in the density scale, and cannot reproduce continuous tone photographic images.

One known continuous-tone digital color printing technique is the thermal resistive dye diffusion (or sublimation) printer. Printing techniques have been disclosed in US-A-5,542,768, and the above cross referenced copending applications. However, a thermal resistive head (both thermal wax transfer and dye diffusion) prints at a pressure contact to the CD surface. Good printing uniformity by thermal resistive printing requires (see for example, US-A-5,244,861) a conformable layer in the receiving paper, which is lacking in CDs.

All the above CD printing techniques have the disadvantage that the data is printed on the external surfaces (normally the opposite side of the data reading surface) of the CDs so that the printed data can be damaged by physical abrasion during usage.

### SUMMARY OF THE INVENTION

An object of this invention is to provide a method of providing human readable information on a recordable disk that prevents the printed records from physical abrasion and are thus relatively permanent.

This object is achieved by a compact disk having at least two substrates and an internal recording layer and an internal printed layer with human readable information.

### ADVANTAGES

The present invention provides an effective way of providing human readable information in a CD that is free from physical abrasion during usage of the CD.

A feature of this invention is that customized images can be produced by computers that can readily be transferred to the compact disk.

Another feature of the invention is to print a mirror image of the intended data on the internal surfaces of the transparent disk polymer support.

Another feature of the invention is that the mirror image can be printed directly on the internal surface of a disk polymer support

Another feature of the invention is that the mirror image can be printed on an essentially transparent coating layer of the internal surface of a disk polymer support.

Another feature of the invention is that the image was printed on an internal surface of the polymer support where no data is stored.

Another feature of the invention is that additional coatings can be made on the internal surfaces of the disk polymer support to serve as the background for the printed image.

### BRIEF DESCRIPTION OF THE DRAWINGS

FIG. 1 is a partial schematic view showing an apparatus for printing records on CD disks using infrared laser thermal transfer wherein the CD is in transferable relationship with a colorant donor element;
FIG. 2 is an apparatus for scanning a laser beam across a record which is focused on a dye donor element for transfer of the record to a compact disk;
FIG. 3 is a partial schematic view showing an apparatus for printing human readable information on an internal surface of a portion of a compact disk using infrared laser thermal transfer wherein the portion is in transferable relationship with a colorant donor element invention;
FIG. 4 is the layout of two portions of a compact disk that will be combined into the CD, the upper half disk carries the data storage for the CD, and the lower half disk is printed with human readable information on the internal surface shown in FIG. 3; and
FIG. 5 is another layout of two disk portions that will be combined into one CD, both half disks carry the data storage areas, and human readable information is printed in the areas outside of the data storage areas on the internal surfaces of both half disks.

### DETAILED DESCRIPTION OF THE INVENTION

Although the present invention is described with relation to a compact disk which can include a CD-ROM and a CD-R, it will be understood that it also can be directly applied to newer forms of disks such as those called digital versatile (or video) disks or DVD. Therefore, whenever the term compact disk is used, it will be understood to include optical storage media. In accordance with the present invention, two disk portions, which can conveniently be a half of a disk, can be laminated together. This is, of course, backward compatible with CD-ROM players. Both portions can store information thus increasing the amount of information stored. Alternatively, one portion can carry and the other portion can be left blank. One example of the multiple recording substrate on different portions of a disk is DVD. A description of the new format for DVD versus the CD format is described in "Next Generation Compact Discs" by Alan E. Bell, pp 42-46, Scientific American, July, 1996. So that when the term CD is used, it will be understood that it includes all of these related types of disks. The term data as used throughout this specification will be understood to those skilled in the art to include digital data such as bar codes, analog data such as text, graphics such as line art, pictorial information such as colored images or combinations thereof, and the like. The term human readable information will include text, pictures, and graphics and the like.

Although the present invention is applicable to many printing techniques, infra-red laser thermal printing will be described for providing human readable information.

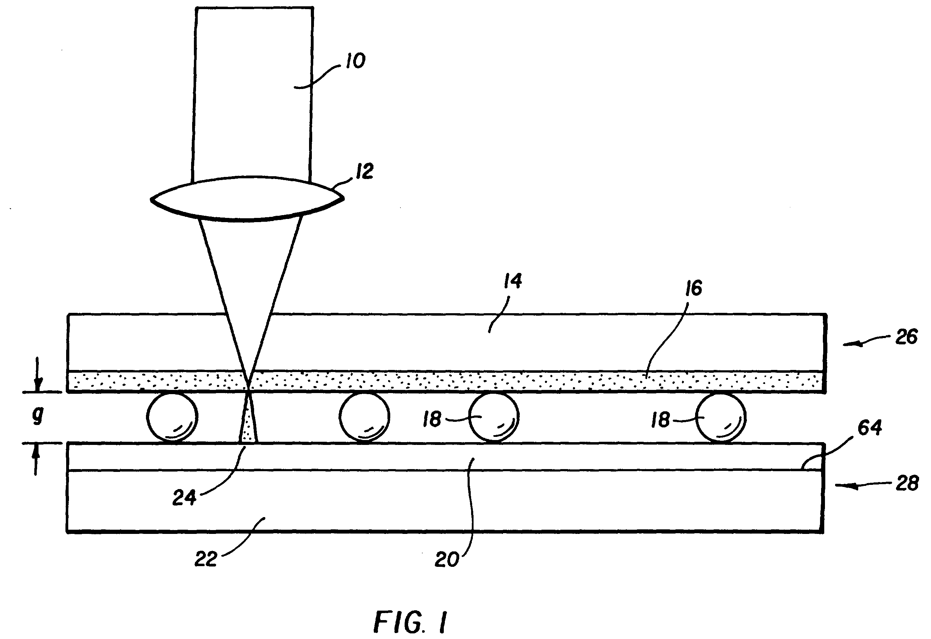

Referring to FIG. 1, a diode laser beam 10 is shown being focused by a lens 12 through a transparent donor element support 14 onto a layer 16 which contains a colorant such as a dye and a light absorbing structure for the laser beam to generate heat. Upon heating to an appropriate temperature, the colorant is transferred to the disk record layer 20 which is coated onto the disk. The substrate of the disk is provided by a polymeric support layer 22. Upon transfer of colorant to the layer 16, after the colorant is driven into the layer, it produces a colored pixel 24 of the desired image. A polymeric binder is provided to hold the colorant in the layer 16. The heat generated by the absorption of the laser beam causes the colorant to evaporate, sublime, or ablatively transfer the pixel 24 from the donor element layer to the disk 28. Between the donor element and the disk are deposed spacer beads 18 to maintain a fixed gap "g" between the donor element 26 and the disk record layer 20. Throughout this specification, whenever the term colorant is used, it will be understood to includes dyes, pigments, or transferable materials which can form a dichroic filter or the like. After the first color is printed, the donor element is removed without disturbing the position of the disk, the second color donor element is placed in position, and the printing process is repeated with the second digital color record. Generally three color donor elements are required for a full color image; cyan, magenta and yellow, corresponding to the red, green and blue color separations of the digital image.

The colorants in the color layer can be chosen from a number of dyes or pigments. It is important that the colorant have a clean, strong hue, with good color saturation and little unwanted absorption in the optical region of the electromagnetic spectrum. The colorant should also have a low thermal mass, so the minimum amount of heating is required to cause the colorant to transfer from the donor element to the receiver. Throughout this specification, whenever the term "thermal mass" is used, it will be understood to mean the weight, or mass, of material that will be raised a given temperature by a given amount of energy (a given number of Joules). Exemplary dyes that can be use can be found in commonly assigned US-A-5,576,267 to DeBoer et al, the disclosure of which is hereby incorporated by reference.

The polymeric binder for the colorant can be chosen from the common film forming thermoplastic polymers, such as cellulose acetate, cellulose acetate propionate, polyvinylbutyral, nitrocellulose, and the like. Exemplary binder polymers can be found in US-A-5,491,045, the disclosure of which is hereby incorporated by reference.

The polymeric receiver layer 20 on the disk can be chosen from a number of film forming polymers such as polycarbonates, polyesters, and polyacrylates, for example. It should be noted that it is possible for the composition of the polymeric receiver layer to be the same as that of the disk polymer support 24, that is, the disk can be written on directly, without coating a separate layer 20. A different polymer may be chosen to optimize the performance of the disk. The polymeric receiver layer 20 may be coated over the entire surface of the disk, or may cover only a portion of the surface. The polymeric receiver layer 20 may contain addenda such as surfactants to aid in coating, or opacification agents such as titanium dioxide and the like to provide a white reflective surface. Exemplary polymers can be found in US-A-4,695,286; US-A-4,470,797; US-A-4,775,657; and US-A-4,962,081, the disclosure of which is hereby incorporated by reference. Factors dictating the proper choice of the receiver polymer layer are compatibility with the colorant, abrasion resistance, water and fade resistance of the image, cost and manufacturability. A proper choice of the polymeric receiver layer and the colorant will provide a relatively permanent record. The term "relatively permanent" as used throughout this specification will be understood to those skilled in the art to mean that labeled disk, in the normal course of use and storage will not undergo significant change over a period of many years.

The absorber in the donor can be a dye or a pigment Ideally, the absorber should have high absorption for a given thermal mass, and should not transfer to the receiver in any significant way that might contaminate the colors of the image. Exemplary dyes that can be used as absorbers can be found in US-A-4,973,572, the disclosure of which is hereby incorporated by reference.

The spacer beads 18 in FIG. 1 can be polymeric, crosslinked or not, inorganic materials such as sand, glass, or metal, as long as they are insoluble in the solvent or binder that they are coated in. The shape of the beads can be symmetric, such as spherical, or unsymmetric, provided the range of the average diameter is no more than 50% of the average diameter. The spacer beads can be located either in the receiver layer, as exemplified by US-A-4,876,235 or in the donor element, as exemplified by US-A-4,772,582, the disclosures of which are hereby incorporated by reference. The purpose of the beads is to provide spacing so that the gap "g" remains constant through the process of transferring colorant. The details of size, number and distribution of the beads are also given in the above references.

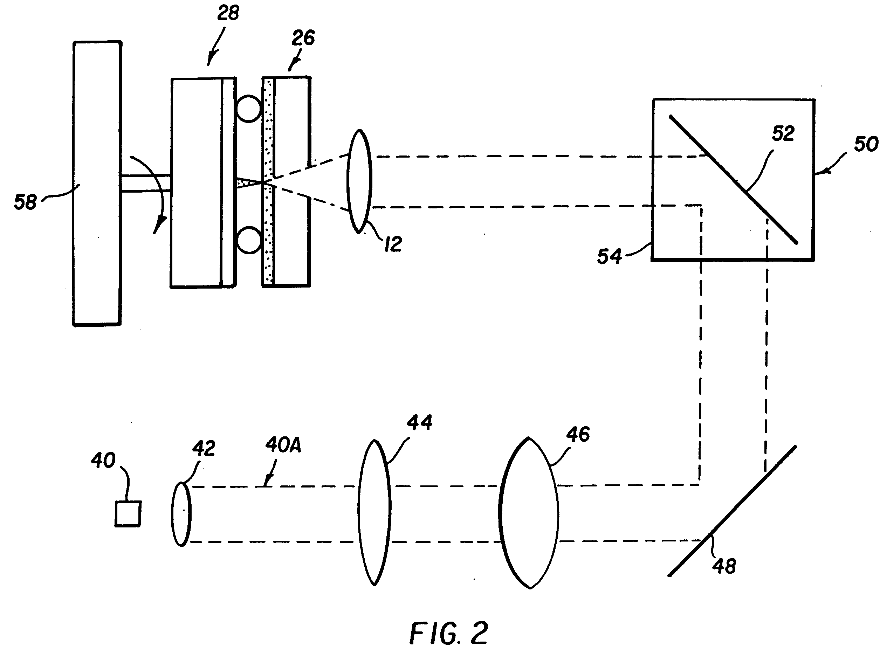

FIG. 2 shows a laser diode 40 which emits a beam 10 of laser light which passes through collimating lens 42, beam shaping lenses 44 and 46 and reflects off a fixed mirror 48. A galvanometer structure 50 includes a moving mirror 52 and a motor 54 which oscillates or nutates the beam of light which was reflected from the fixed mirror 48. The motor 54 controls the position of the moving mirror 52 so as to provide relative movement between the disk surface and the laser beam and modulating the laser beam in correspondence with a data record, thereby effecting laser thermal colorant transfer from the donor element to the disk in correspondence with a desired data record. The position of the laser beam is thereby controlled by the galvanometer structure 50. It will be noted that an F-theta lens 12 is provided between the disk surface and the moving mirror 52 and is adapted to focus the beam onto the donor element. The position of the moving mirror 52 controls the position of the laser spot in one direction, and a *rotational* mechanism 58 moves the CD to control the relative position of the laser spot in an orthogonal direction opposite to that provided by the moving mirror 52. Other means of translation can also be employed, such as two galvanometers, or a linear motor to translate the disk. Although the figure shows a diode laser for illustration, other lasers can be used, such as gas lasers or solid state lasers. Other optical paths are also possible.

The laser beam can be focused to approximately the same size as the wavelength of light emitted by the laser. For a near infra-red laser this is a spot size of about one micron. This small size assures that a high quality photographic image can be printed. Modulation of the intensity of the beam allows many levels of color, from very light to very dark, to be printed at any given pixel of the image.

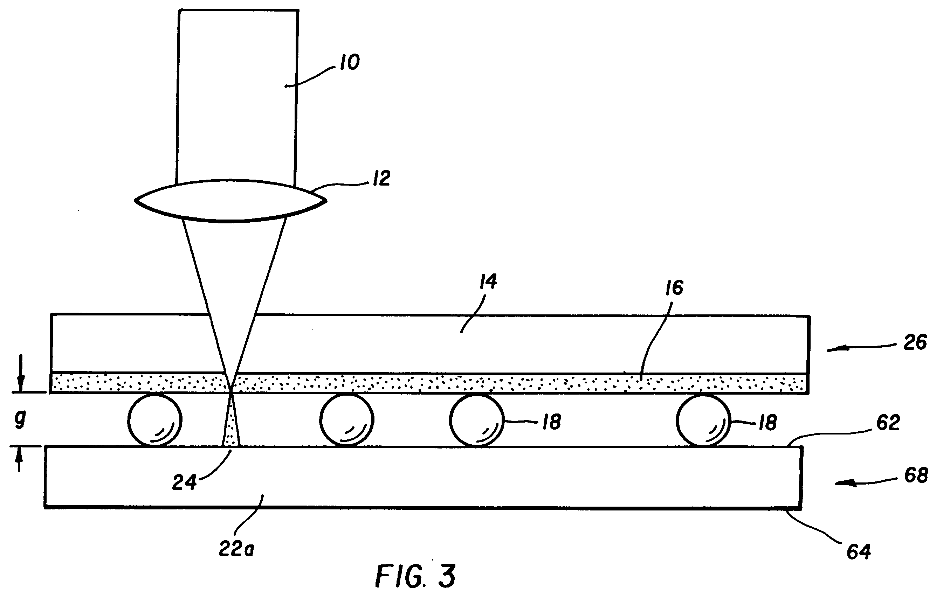

Referring to FIG. 3, the experimental layout is similar to that illustrated in FIG 1 except for, first, only one portion, in this case a half of the disk 68, is used to receive the colorant from the donor element 26; second, the colorant was transferred to the internal surface 62, rather than an external surface of the disk polymer support 64; furthermore, as described in the example below, no coating was required on the internal surface of the disk polymer support.

### Example

Cyan, magenta and yellow dye donor elements, as described in US-A-4,973,572 were placed in contact with the internal surfaces of one half of disk 68. The disk polymer support 22a is made of polycarbonate material and is not coated. The composition of the dye donor elements, including the spacer bead overcoat, is completely described in US-A-4,772,582. The laser power was 37 mW at the focal plane. After exposure to all three colors, a high quality photographic image was seen on the internal surface 62 of one half of the disk 68. The printed image is the mirror image (opposite in left-right symmetry) of the intended image. After the final CD is formed (described below), the desired image is visualized through the transparent polycarbonate disk polymer support. After printing is completed, the image is fused in methylene chloride vapor.

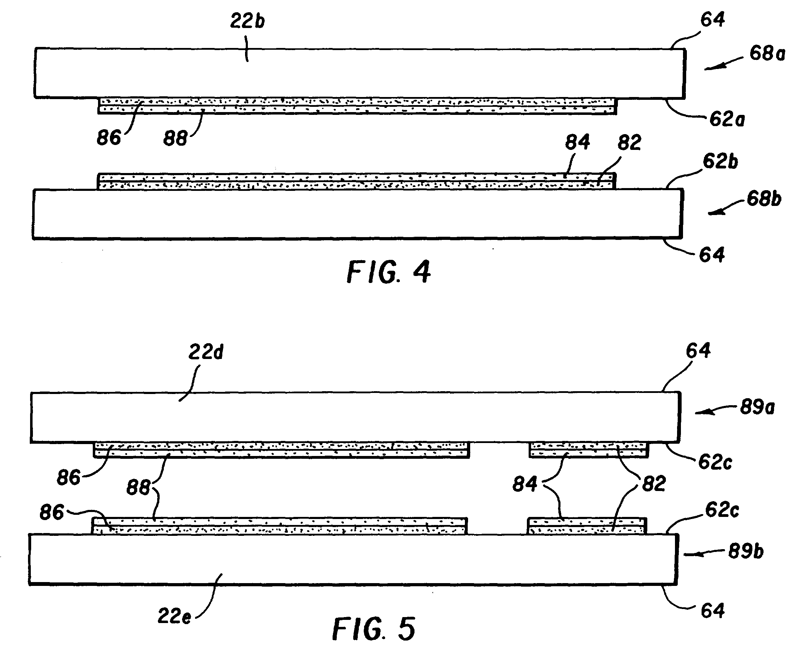

Referring to FIG 4., the portion of disk 68b that is printed with data is combined with another one half of a disk 68a that carries the stored information to form the final CD. In the upper portion of a disk 68a, a dye layer 86 and a metallized reflective layer are coated on the internal surface 62a of the disk polymer support 22b for storing data. In the lower portion of a disk 68b, the printed colorant data in the disk record layer 20 and a back coat 84 are bonded to the internal surface 62b of the disk polymer support 22c.

The back coat 84 which is coated over the polymeric receiver layer 20 is an acrylate-based polymer material containing TiO₂ particles. The whitening effect of the TiO₂ particles provides a background to the image in the polymer receiver layer 20. It is understood that coats of different colors can be coated in coat 84. It is also possible that no back coat is required, in that the polymeric binder for the dye receiving layer 20 can serve both to hold the dye image and to laminate the two portions of the disk together. The adhesives that are used in laminating the two portions of the disk are disclosed in the commonly assigned US-A-5,466,723; US-A-5,422,234; US-A-5,418,120; US-A-5,393,649; and US-A-5,340,420.

Another disk layout is illustrated in FIG. 5. The two portions of a disk 89a and 89b both carry the stored data and printed data on the internal surfaces 62c of the disk polymer supports 22d and 22e. Like in FIG. 4, dye layers 86 and metallized reflective layers are coated on the internal surfaces 62c of the disk polymer supports 22d and 22e for storing data. In the areas not used for data storage, the printed colorant data in the disk record layer 20 and back coat 84 are bonded to the internal surfaces 62c of the disk polymer supports 22d and 22e. The two portions of disks 89a and 89b are combined to form the final CD.

Referring to FIG. 4 and FIG. 5, the adhesives are first applied on the inside surfaces of the two portions of the disk that are facing each other. Here the inside surfaces refer to the exposed portions of the surfaces on 62a, 62b, 62c, 84, and 88 in FIG. 4 and FIG. 5. Next the two portions of the disk are aligned and pressed together so that the inside surfaces are in good contact. Heating and other treatment can be applied to assist the curing of the adhesives. After the bonding of the two portions of the disk, the final disk has the external surfaces of the polymer support 64 and the edges exposed to air. The adhesives and detailed lamination procedure are disclosed in the commonly assigned US-A-5,466,723; US-A-5,422,234; US-A-5,418,120; US-A-5,393,649; and US-A-5,340,420.

### Parts List

- 14: donor element support
- 16: color layer
- 18: spacer beads
- 20: disk record layer
- 22,22a,22b,22c: disk polymer support
- 24: colored pixel
- 26: donor element
- 28: disk
- 40: laser diode
- 10: beam
- 42: lens
- 44: lens
- 46: lens
- 48: fixed mirror
- 50: galvanometer structure
- 52: moving mirror
- 54: motor
- 12: F-theta lens
- 58: rotational mechanism
- 62,62a,62b,62c: internal surface of the disk polymer support
- 64: external surface of the disk polymer support
- 68,68a,68b: one half of the disk
- 84: back coat
- 86: dye layer
- 88: metallized reflective layer
- 89a,89b: one half of the disk

## Claims

1. A compact disk having at least two substrates and an internal recording layer and an internal printed layer with human readable information.

2. A compact disk comprising: two separate portions which are laminated together, an internal recording layer, and internal human readable information provided within the compact disk.

3. A compact disk, comprising:
a) at least first and second substrates;
b) a recording layer formed on the first substrate;
c) human readable information provided on the second substrate; and
d) means for securing the recording layer and a printing layer in proximate relationship to thereby form the compact disk

4. A compact disk, comprising:
a) at least first and second substrates;
b) a recording layer formed on the first substrate;
c) a printing layer having human readable information on the second substrate; and
d) means for securing the recording layer and a printing layer in proximate relationship to thereby form the compact disk.

5. The compact disk of claim 3 further including a reflective layer formed on the recording layer and a backcoat layer formed on the printing layer.

6. The compact disk of claim 4 further including a reflective layer formed on the recording layer and a backcoat layer formed on the printing layer.

7. A compact disk, comprising:
a) at least first and second substrates;
b) a recording layer formed on the first substrate and a printing layer formed on the first substrate; and
c) means for securing the recording layer and a printing layer in proximate relationship to the second substrate to thereby form the compact disk.

8. A compact disk, comprising:
a) at least first and second substrates;
b) a first recording layer formed on the first substrate and a first printing layer formed on the first substrate; and
c) a second recording layer formed on the second substrate and a second printing layer formed on the first substrate; and
d) means for securing the two substrates in such a relationship to the second substrate to thereby form the compact disk.

9. A method for forming human readable information on an internal surface of a compact disk (CD), comprising the steps of:
a) providing two separate compact disk portions;
b) coating a printing layer on one of the surfaces of the portions and forming printing information in such printing layer;
c) laminating the two portions together so that the compact disk has human readable information on an internal surface.

10. The method of claim 8 wherein the printing information is formed by transferring colorant to the surface of the printing layer and fixing such colorant into such printing layer surface to thereby provide human readable information.
